# EUROPÄISCHE PATENTSCHRIFT

(11) **EP 2 119 574 B1**
(45) Veröffentlichungstag und Bekanntmachung des Hinweises auf die Patenterteilung: **15.02.2012**
(21) Anmeldenummer: 09155453.5
(22) Anmeldetag: 18.03.2009
(51) Int. Cl.: B60C 11/04, B60C 11/13

(54) **Laufflächenprofil eines Fahrzeugreifens**
Bearing surface profile of a vehicle tyre
Profil de surface de roulement d'un pneu de véhicule

(30) Priorität: 16.05.2008 DE 102008023977
(43) Veröffentlichungstag der Anmeldung: 18.11.2009
(73) Patentinhaber: Continental Reifen Deutschland GmbH, 30165 Hannover (DE)
(72) Erfinder: Fischer, Markus, 30823, Garbsen (DE); Behr, Ulrich, 30169, Hannover (DE)
(74) Vertreter: Finger, Karsten

(56) Entgegenhaltungen:
- DE-A1-102005 042 903
- JP-A- 60 203 505

## Beschreibung

Die Erfindung betrifft ein Laufflächenprofil eines Fahrzeugreifens - insbesondere eines Fahrzeugluftreifens - mit einer oder mehreren in Umfangsrichtung des Fahrzeugreifens gerichteten, über den Umfang des Fahrzeugreifens erstrecken Umfangsrillen die mit zwei Rillenwänden axial nach beiden Seiten jeweils eine über den Umfang des Fahrzeugreifens erstreckte Profilrippe oder Profilblockreihe begrenzt, wobei die Umfangsrille mit einem über den Umfang des Fahrzeugreifens erstreckten Rillengrund und den beiderseits des Rillengrundes aus dem Rillengrund nach radial außen erstreckten, die Umfangsrille in axialer Richtung begrenzenden Rillenwänden ausgebildet ist.

Üblicherweise werden bei derartigen Fahrzeugreifen die Umfangsrillen in einer senkrecht zur Erstreckungsrichtung des Rillengrundes ausgebildeten Schnittebene jeweils mit von radial innen nach radial außen v-förmig erweitertem Rillenquerschnitt mit ausgebildet, wobei die beiden Rillenwände einen gleichen Neigungswinkel zur Radialen aufweisen. Der Übergang zwischen Rillengrund und Neigungswinkeln ist ebenfalls an beiden Rillenwänden mit einem gleich großen Krümmungsradius ausgebildet.

Derartige Fahrzeugreifen besonders im Hochgeschwindigkeitsbereich unterliegen dem Zielkonflikt aus guten Handlingeigenschaften einerseits und guten Aquaplaningeigenschaften andererseits. Zur Erzielung guter Handlingeigenschaften ist eine hohe Quersteifigkeit der Profilblockelemente bzw. der Profilrippen um ihre Umfangsrichtung wünschenswert. Hierzu ist es wünschenswert die Neigungswinkel der Rillenwände von Umfangsrillen möglichst groß auszubilden. Zur Erzielung guter Aquaplaningeigenschaften ist es wünschenswert, den offenen Querschnitt einer Umfangsrille möglichst groß auszubilden. Hierzu ist es wünschenswert die Neigungswinkel der Rillenwände zur Radialen möglichst klein auszubilden. Aufgrund dieser sich widersprechenden Anforderungen wird häufig ein Kompromiss mit Neigungswinkeln gewählt, die reduzierte Handlingeigenschaften mit reduzierten Aquaplaningeigenschaften verbindet. Je nach Anforderungen werden die beiden Neigungswinkel zugunsten verbesserter Handlingeigenschaften unter in Kaufnahme reduzierter Aquaplaningeigenschaften größer oder aber zugunsten verbesserter Aquaplaningeigenschaften unter in Kaufnahme reduzierter Handlingeigenschaften kleiner gewählt.

Es ist - beispielsweise aus der EP 0 681 930 B1- bekannt, die beiden Rillenwände zur Erhöhung der Traktion auf Schnee mit unterschiedlichen Neigungswinkeln gegenüber der Radialen auszubilden, wobei der Neigungswinkel der jeweils zur Äquatorebene des Reifens weisenden Seitenwand einer Umfangsrille jeweils kleiner gewählt ist als der Neigungswinkel der von der Äquatorebene wegweisenden Seite. Die Übergänge zwischen Rillengrund und Rillenwänden sind - wie üblich - jeweils gleich ausgebildet.

Darüber hinaus ist es im Zusammenhang mit Diagonalreifen für Nutzfahrzeuge aus der US 4,284,115 bekannt, zur Reduzierung von bei solchen Fahrzeugreifen möglichen Rissbildungen im Rillengrund den Neigungswinkel an der zur Äquatorebene hinweisenden Rillenwand kleiner als den von der Äquatorebene wegweisenden Rillenwand auszubilden. Die Übergänge zwischen Rillengrund und Rillenwänden sind - wie üblich - gleich ausgebildet. Als Alternative ist aus diesem Dokument bekannt, ebenfalls zur Vermeidung der Rissbildung bei gleichem Neigungswinkel der beiden Seitenwände den Krümmungsradius im Übergang zwischen der zur Äquatorebene weisenden Seitenwand und dem Rillengrund größer auszubilden als den Krümmungsradius im Übergang zwischen der zur Äquatorebene weisenden Seitenwand und dem Rillengrund.

Aus der JP 60203545 A ist eine Ausbildung eines Laufflächenprofils gemäß den Merkmalen des Oberbegriffs von Anspruch 1 bekannt.

Der Erfindung liegt die Aufgabe zugrunde, mit einfachen Mitteln ein Laufflächenprofil eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen, die mit zwei Rillenwänden axial nach beiden Seiten jeweils eine über den Umfang des Fahrzeugreifens erstreckte Profikippe oder Profilblockreihe begrenzt, wobei die Umfangsrille mit einem über den Umfang des Fahrzeugreifens erstreckten Rillengrund und den beiderseits des Rillengrundes aus dem Rillengrund nach radial außen erstreckten, die Umfangsrille in axialer Richtung begrenzenden Rillenwänden ausgebildet ist, zu schaffen, das bei guten Handlingeigenschaften gute Aquaplaningeigenschaften ermöglicht.

Die Aufgabe wird erfindungsgemäß durch die Ausbildung eines Laufflächenprofils eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen, die mit zwei Rillenwänden axial nach beiden Seiten jeweils eine über den Umfang des Fahrzeugreifens erstreckte Profilrippe oder Profilblockreihe begrenzt, wobei die Umfangsrille mit einem über den Umfang des Fahrzeugreifens erstreckten Rillengrund und den beiderseits des Rillengrundes aus dem Rillengrund nach radial außen erstreckten, die Umfangsrille in axialer Richtung begrenzenden Rillenwänden ausgebildet ist, gemäß den Merkmalen von Anspruch 1 gelöst, bei dem längs der Erstreckungsrichtung der Umfangsrille jeweils in einer senkrecht zur Erstreckungsrichtung des Rillengrundes ausgebildeten Schnittebene die erste Rillenwand von radial innen nach radial außen von der Umfangsrille wegweisend geneigt mit einem ersten Schnittwinkel γ zur Radialen R im Reifen und die zweite Rillenwand von radial innen nach radial außen von der Umfangsrille wegweisend geneigt mit einem radial inneren Erstreckungsbereich mit einem zweiten Schnittwinkel β zur Radialen R im Reifen und einem radial äußeren Erstreckungsbereich mit einem dritten Schnittwinkel α zur Radialen R im Reifen und der Übergang zwischen erster Rillenwand und Rillengrund mit einem Krümmungsradius R₁ ausgebildet ist, wobei der zweite Schnittwinkel β größer als der dritte Schnittwinkel α und der dritte Schnittwinkel α größer als der erste Schnittwinkel γ und der Krümmungsradius R₁ mit 2mm≤R₁≤6mm - insbesondere mit 3mm≤R₁≤4mm - ausgebildet ist, wobei längs der Erstreckungsrichtung der Umfangsrille jeweils in einer senkrecht zur Erstreckungsrichtung des Rillengrundes ausgebildeten Schnittebene sowohl die Verlängerung des radial äußeren Erstreckungsbereichs der zweiten Rillenwand nach radial innen mit dem radial inneren Erstreckungsbereich der zweiten Rillenwand einen Winkel δ als auch die axiale Verlängerung des geradlinigen Rillengrundes ebenfalls mit dem radial inneren Erstreckungsbereich der zweiten Rillenwand den Winkel δ einschließt.

Durch diese Ausbildung den Rillenwände mit den unterschiedlichen Schnittwinkeln α, β und γ kann eine besonders hohe Quersteifigkeit des Profils entgegen den aus Richtung der zweiten Rillenwand zur ersten Rillenwand auf das Profil einwirkenden Querbelastungen eingestellt werden. Dies ermöglicht eine Optimierung der Querabstützung der Profilrippe bzw. der Profilblockreihe bei gleichzeitig hohem Negativanteil des Profils. Durch Ausbildung der radial inneren Erstreckung der zweiten Rillenwand mit größtem Schnittwinkel β und des Übergangsbereichs der ersten Rillenwand zum Rillengrund mit Krümmungsradius R₁ mit 2mm≤R₁≤6mm - insbesondere mit 3mm≤R₁≤4mm - kann ein besonders großer offener Querschnitt der Profilrille erzielt werden. Somit können gezielt die für gute Handlingeigenschaften wesentliche Querkräfte effizient aufgenommen werden und dennoch viel Wasser zuverlässig über die Umfangsrillen aufgenommen und abgeleitet werden.

Besonders vorteilhaft ist die Ausbildung eines Fahrzeugluftreifens gemäß den Merkmalen von Anspruch 2, wobei die zweite Rillenwand die Umfangsrille zu der als zur Fahrzeugaußenseite (OU) hinweisend ausgebildeten Schulter und die erste Rillenwand die Umfangsrille zu der als zur Fahrzeuginnenseite (IN) hinweisend ausgebildeten Schulter hin begrenzt. Dies ermöglicht eine für Kurvenfahrten besonders günstige Quersteifigkeit der Profilrippe bzw. der Profilblockreihe.

Besonders vorteilhaft ist die Ausbildung eines Fahrzeugluftreifens gemäß den Merkmalen von Anspruch 3, wobei längs der Erstreckungsrichtung der Umfangsrille jeweils in einer senkrecht zur Erstreckungsrichtung des Rillengrundes ausgebildeten Schnittebene der Rillengrund in einem Erstreckungsbereich mit der Erstreckungslänge a, der sich zwischen dem radial inneren Erstreckungsbereich der zweiten Rillenwand mit dem zweiten Schnittwinkel β zur Radialen R im Reifen und dem Übergang zwischen erster Rillenwand und Rillengrund mit einem Krümmungsradius R₁ erstreckt, geradlinig - insbesondere parallel zur Drehachse des Fahrzeugreifens - ausgebildet ist.

Besonders vorteilhaft ist die Ausbildung eines Fahrzeugluftreifens gemäß den Merkmalen von Anspruch 4, wobei die Erstreckungslänge a mit 0mm ≤a≤16mm ausgebildet ist.

Besonders vorteilhaft ist die Ausbildung eines Fahrzeugluftreifens gemäß den Merkmalen von Anspruch 5, wobei das Maß der radialen Erstreckung des radial äußeren Erstreckungsbereichs der zweiten Rillenwand mit h₁ und das Maß der radialen Erstreckung des radial inneren Erstreckungsbereichs der zweiten Rillenwand mit h₂ ausgebildet ist, wobei für das Verhältnis von h₂ zu h₁ gilt: 1≥(h₂/h₁)≥0,1, insbesondere 0,5≥(h₂/h₁)≥0,25. Dies ermöglicht eine Optimierung der Querabstützung der Profilrippe bzw. der Profilblockreihe bei gleichzeitig hohem Negativanteil des Profils.

Besonders vorteilhaft ist die Ausbildung eines Fahrzeugluftreifens gemäß den Merkmalen von Anspruch 6, wobei der ersten Schnittwinkel γ mit 0°≤γ≤20° - insbesondere mit 3°≤γ≤8°-, der zweite Schnittwinkel β mit 30°≤β≤45° - insbesondere mit 38°≤β≤42°- und der dritte Schnittwinkel α mit 1°≤α≤25° - insbesondere mit 8°≤α≤15°- ausgebildet ist. Dies ermöglicht eine Optimierung der Querabstützung der Profilrippe bzw. der Profilblockreihe bei gleichzeitig hohem Negativanteil des Profils.

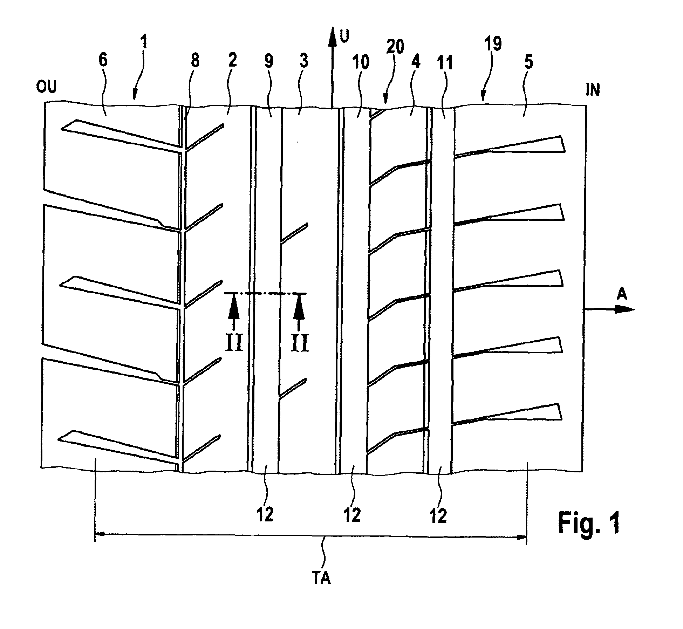

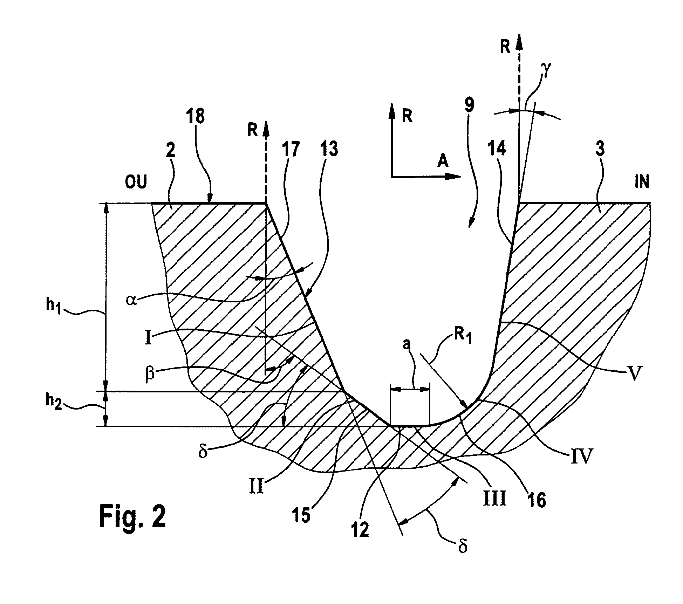

Die Erfindung wird im Folgenden an Hand eines in den Fig. 1 und 2 dargestellten Ausführungsbeispiels näher erläutert.
- Fig. 1: Ausschnitt eines asymmetrischen Laufflächenprofils eines Fahrzeugluftreifens für Personenkraftwagen Draufsicht,
- Fig. 2: ausschnittsweise vergrößerte Schnittdarstellung des Laufflächenprofils einer der Umfangsrillen gemäß Schnitt II-II von Fig. 1 in einer Querschnittsebene, die die Reifenachse beinhaltet, zur Erläuterung der Erfindung.

Fig. 1 und Fig. 2 zeigen ein asymmetrisches Laufflächenprofil eines auf einer Felge an einem Fahrzeug montierten, im Betriebszustand befindlichen PKW-Reifens radialer Bauart, der für Hochgeschwindigkeiten geeignet ist.

In Fig. 1 ist die Umfangsrichtung U sowie die axiale Richtung A des Fahrzeugluftreifens und in Fig. 2 die axiale Richtung A sowie die radiale Richtung R des Fahrzeugluftreifens jeweils mit Pfeilen gekennzeichnet.

Fig.1 und Fig. 2 zeigen das Laufflächenprofil eines auf eine Felge montierten im Betriebszustand befindlichen Reifens unter Normbedingungen. In Figur 1 ist das Maß der Reifenaufstandsbreite TA eingezeichnet.

Wie in Fig. 1 zu erkennen ist, weist das Laufflächenprofil von der am Fahrzeug zur axialen Außenseite (O U) des Fahrzeugs weisenden axialen Reifenschulter ausgehend in axialer Richtung A nach axial innen zur Fahrzeugmitte (IN) hin weisenden Reifenschulter hin nebeneinander angeordnet ein in Umfangsrichtung U ausgerichtetes Außenschulterprofilband 1, eine erste zentrale Umfangsrippe 2, eine zweite zentrale Umfangsrippe 3, ein zentrales Profilband 4 und ein in Umfangsrichtung U ausgerichtetes Innenschulterprofilband 5 auf. Das Außenschulterprofilband 1, die Umfangsrippen 2 und 3, das zentrale Profilband 4 und das Innenschulterprofilband 5 sind jeweils über den Umfang des Fahrzeugluftreifens erstreckt ausgebildet und in Umfangsrichtung U des Fahrzeugluftreifens ausgerichtet.

Das Außenschulterprofilband 1 ist aus einer auf der axialen Außenseite des Außenschulterprofilbandes 1 axial zur Außenschulter (OU) hin angeordneten Profilblockreihe 6 bekannter Art mit in Umfangsrichtung U des Fahrzeugluftreifens hintereinander angeordneten und jeweils durch Querrillen voneinander getrennt ausgebildeten Profilblockelementen und aus einer auf der axialen Innenseite des Außenschulterprofilbandes 1 ausgebildeten über den Umfang des Fahrzeugluftreifens erstreckten in Umfangsrichtung U ausgerichteten Profilrippe 7 ausgebildet, die jeweils axial durch einen in Umfangsrichtung U ausgerichteten über den gesamten Umfang des Fahrzeugluftreifens erstreckten Feineinschnitt 8 voneinander getrennt sind.

Das Innenschulterprofilband 5 ist in bekannter Weise aus einer über den gesamten Umfang des Fahrzeugluftreifens erstreckt ausgebildeten und in Umfangsrichtung U ausgerichteten Profilblockreihe 19 bekannter Art mit in Umfangsrichtung U des Fahrzeugluftreifens hintereinander angeordneten und jeweils durch Querrillen voneinander getrennt ausgebildeten Profilblockelementen ausgebildet.

Das zentrale Profilband 4 ist in bekannter Weise aus einer über den gesamten Umfang des Fahrzeugluftreifens erstreckt ausgebildeten und in Umfangsrichtung U ausgerichteten Profilblockreihe 20 bekannter Art mit in Umfangsrichtung U des Fahrzeugluftreifens hintereinander angeordneten und jeweils durch Querrillen voneinander getrennt ausgebildeten Profilblockelementen ausgebildet.

Die Umfangsrippe 2 und die Umfangsrippe 3 sind durch eine Umfangsrille 9, die sich über den gesamten Umfang des Fahrzeugluftreifens erstreckt und in Umfangsrichtung U ausgerichtet ist, axial voneinander getrennt. Die Umfangsrippe 3 und das zentrale Profilband 4 sind durch eine Umfangsrille 10, die sich über den gesamten Umfang des Fahrzeugluftreifens erstreckt und in Umfangsrichtung U ausgerichtet ist, axial voneinander getrennt. Das zentrale Profilband 4 und das Schulterprofilband 5 sind durch eine Umfangsrille 11, die sich über den gesamten Umfang des Fahrzeugluftreifens erstreckt und in Umfangsrichtung U ausgerichtet ist, axial voneinander getrennt.

Der Querschnitt der Umfangsrillen 9, 10, 11 in den Querschnittsebenen senkrecht zur Erstreckungsrichtung der jeweiligen Umfangsrille 9,10,11 ist - wie beispielhaft am Querschnitt der Umfangsrille 9 in Fig. 2 dargestellt ist - ausgebildet. Er wird im Folgenden der Einfachheit lediglich anhand des Querschnitts der Umfangsrille 9 erläutert.

Die Umfangsrillen 9, 10, 11 sind jeweils mit einem Rillengrund 12, einer ersten zur Fahrzeuginnenseite (IN) weisenden zweiten Rillenwand 14 und einer zweiten am Fahrzeug zur axialen Außenseite (OU) weisenden Rillenwand 13 ausgebildet. Am Beispiel der Umfangsrille 9 bildet die erste Rillenwand 14 die axial zur Umfangsrille 9 weisende Flanke der Umfangsrippe 3 und die zweite Rillenwand 13 die axial zur Umfangsrille 9 weisende Flanke der Umfangsrippe 2.

Die erste Rillenwand 14 sowie die zweite Rillenwand 13 erstrecken sich dabei von radial innen nach radial außen mit einer jeweils von der axialen Mitte der Umfangsrille 9 axial wegweisenden Neigung. Die erste Rillenwand 14 schließt einen Neigungswinkel γ zur radialen R ein. Ausgehend vom Rillengrund 12 nach radial außen ist die zweite Rillenwand 13 aus einem radial inneren Erstreckungsbereich 15 und aus einem radial äußeren Erstreckungsbereich 17, der sich bis zur Reifenperipherie erstreckt, ausgebildet. Der radial innere Erstreckungsbereich 15 erstreckt sich dabei über eine radiale Erstreckungshöhe h₂ und schließt einen Neigungswinkel ß zur radialen R ein. An den radial inneren Erstreckungsbereich 15 schließt sich der radial äußere Erstreckungsbereich 17 an, der sich über eine radiale Erstreckungshöhe h₁ in radialer Richtung erstreckt und einen Neigungswinkel α zur radialen R einschließt. Für die Neigungswinkel α,β,γ gilt:
β > α > γ.

In einem ersten Übergangsbereich 16 zwischen erster Rillenwand 14 und Rillengrund 12 ist die Querschnittskontur mit einer Krümmung mit einem Krümmungsradius R₁ um einen vom Rillengrund nach radial außen wegweisenden Mittelpunkt gekrümmt ausgebildet.

Die Winkel α, ß und γ sind beispielsweise so gewählt, dass 0°≤γ≤20°, 30°≤β≤45° und 1°≤α≤25° mit β > α > γ. Vorteilhafterweise sind die Winkel α, ß und γ beispielsweise so gewählt, dass 3°≤γ≤8°, 38°≤β≤42° und 8°≤α≤15° mit β > α > γ. Im dargestellten Beispiel von Fig. 2 ist α = 10°, ß = 40° und γ =5°.

Der Krümmungsradius R₁ ist so gewählt, dass für R₁ gilt: 2mm≤R₁≤6mm. Besonders vorteilhaft ist R₁ so gewählt, dass 3mm≤R₁≤4mm. Im dargestellten Beispiel von Fig. 2 ist R₁=3mm gewählt.

Das Maß h₁ der radialen Erstreckung des radial äußeren Erstreckungsbereichs 17 der zweiten Rillenwand 13 und das Maß h₂ der radialen Erstreckung des radial inneren Erstreckungsbereichs 15 der zweiten Rillenwand 13 sind so gewählt, dass für das Verhältnis von h₂ zu h₁ gilt: 1≥(h₂/h₁)≥0,1. Vorteilhafterweise ist das Maß h₁ der radialen Erstreckung des radial äußeren Erstreckungsbereichs 17 der zweiten Rillenwand 13 und das Maß h₂ der radialen Erstreckung des radial inneren Erstreckungsbereichs 15 der zweiten Rillenwand 13 sind so gewählt, dass für das Verhältnis von h₂ zu h₁ gilt: 0,5≥(h₂/h₁)≥0,25. Im dargestellten Beispiel von Fig. 2 ist das Verhältnis von h₂ zu h₁ so gewählt, dass (h₂/h₁)=0,25.

In dem in Fig. 2 dargestellten Ausführungsbeispiel erstreckt sich der Rillengrund 12 in axialer Richtung über ein Erstreckungsmaß a zwischen dem Übergangsbereich 16 und dem radial inneren Erstreckungsbereich 15 der zweiten Rillenwand 13 mit geradliniger und parallel zur Drehachse des Fahrzeugluftreifens ausgebildeter Schnittkontur. Das Erstreckungsmaß ist dabei so gewählt, dass für a gilt 0mm ≤a ≤16mm. Im dargestellten Beispiel von Fig. 2 ist a = 4mm gewählt.

Wie in Figur 2 dargestellt, schließt die Verlängerung des radial äußeren Erstreckungsbereichs 17 der zweiten Rillenwand 13 nach radial innen in der in Figur 2 dargestellten Schnittebene einen Winkel δ mit der in der Schnittebene dargestellten Konturlinie des radial inneren Erstreckungsbereichs 15 der zweiten Rillenwand 13 ein. Den gleichen Winkel δ schließt die in der Schnittebene von Figur 2 dargestellte Konturlinie des radial inneren Erstreckungsbereichs 15 der zweiten Rillenwand 13 mit der Drehachse A des Fahrzeugluftreifens und mit der in Figur 2 dargestellten Verlängerung Konturlinie des Rillengrundes 12 in Richtung der zweiten Rillenwand 13 ein.

In einer weiteren nicht dargestellten Ausführung ist in der in Fig. 2 dargestellten Schnittebene rein fertigungsbedingt zwischen dem radial äußeren Erstreckungsbereich 17 und dem radial inneren Erstreckungsbereich 15 der zweiten Rillenwand 13 ein kurzer Übergang mit einem Krümmungsradius von 1 mm ausgebildet. Der Krümmungsmittelpunkt liegt auf der zur Rille weisenden Seite.

Ebenso ist in einer nicht dargestellten Ausführung in der in Fig. 2 dargestellten Schnittebene rein fertigungsbedingt im Übergangsbereich zwischen radial innerem Erstreckungsbereich 15 der zweiten Rillenwand 13 und dem geradlinig ausgebildeten achsparallelen Abschnitt des Rillengrundes 12 fertigungsbedingt ein kurzer Übergang mit Krümmungsradius von 1 mm ausgebildet. Der Krümmungsmittelpunkt liegt auf der zur Rille weisenden Seite.

In Figur 1 ist das Maß der Reifenaufstandsbreite TA eingezeichnet. Das Profil des Fahrzeugluftreifens weist innerhalb der im Reifenlatsch ausgebildeten Bodenaufstandsfläche ein Verhältnis V₁ auf mit V₁ = N/G, wobei N die tatsächliche Fläche angibt, in der Gummimaterial mit der Straßenoberfläche in Berührkontakt steht und wobei G die Gesamtfläche der Bodenaufstandsfläche angibt. Der Fahrzeugluftreifen weist mit seinem Profil darüber hinaus ein zweites Verhältnis V₂ auf mit V₂ = VOID/VOL, wobei VOID das von den Profilrillen innerhalb der Bodenaufstandsfläche eingeschlossene Negativ-Volumen des Profils angibt und VOL das innerhalb der Bodenaufstandsfläche in der Erstreckungstiefe bis zur radialen Position des Rillengrundes der im Reifenprofil ausgebildeten am tiefsten ausgebildeten Profilrille eingeschlossene Gesamtvolumen. Das Verhältnis von V₁ zu V₂ ist dabei so gewählt, dass gilt: 1,5 ≤ (V₁/V₂) ≤4,5.

### Bezugszeichenliste

### (Teil der Beschreibung)

- 1: Außenschulterprofilband
- 2: Umfangsrippe
- 3: Umfangsrippe
- 4: Profilblockreihe
- 5: Innenschulterprofilband
- 6: Profilblockreihe
- 7: Profilrippe
- 8: Feineinschnitt
- 9: Umfangsrille
- 10: Umfangsrille
- 11: Umfangsrille
- 12: Rillengrund
- 13: Rillenwand
- 14: Rillenwand
- 15: Übergangsbereich
- 16: Innerer Rillenwandabschnitt
- 17: Äußerer Rillenwandabschnitt
- 18: Mantelfläche
- 19: Profilblockreihe
- 20: Profilblockreihe

## Patentansprüche

1. Laufflächenprofil eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen (9,10,11), die mit zwei Rillenwänden (13,14) axial nach beiden Seiten jeweils eine über den Umfang des Fahrzeugreifens erstreckte Profilrippe oder Profilblockreihe begrenzt, wobei die Umfangsrille (9,10,11) mit einem über den Umfang des Fahrzeugreifens erstreckten Rillengrund (12) und den beiderseits des Rillengrundes aus dem Rillengrund (12) nach radial außen erstreckten, die Umfangsrille in axialer Richtung begrenzenden Rillenwänden (13,14) ausgebildet ist,
wobei längs der Erstreckungsrichtung der Umfangsrille (9,10,11) jeweils in einer senkrecht zur Erstreckungsrichtung des Rillengrundes (12) ausgebildeten Schnittebene die erste Rillenwand (14) von radial innen nach radial außen von der Umfangsrille wegweisend geneigt mit einem ersten Schnittwinkel γ zur Radialen R im Reifen und die zweite Rillenwand (13) von radial innen nach radial außen von der Umfangsrille wegweisend geneigt mit einem radial inneren Erstreckungsbereich (15) mit einem zweiten Schnittwinkel β zur Radialen R im Reifen und einem radial äußeren Erstreckungsbereich (17) mit einem dritten Schnittwinkel α zur Radialen R im Reifen und der Übergang (16) zwischen erster Rillenwand (14) und Rillengrund (12) mit einem Krümmungsradius R₁ ausgebildet ist,
wobei der zweite Schnittwinkel β größer als der dritte Schnittwinkel α und der dritte Schnittwinkel α größer als der erste Schnittwinkel γ ausgebildet ist,
**dadurch gekennzeichnet,**
**dass** der Krümmungsradius R₁ mit 2mm≤R₁≤6mm - insbesondere mit 3mm≤R₁≤4mm - ausgebildet ist, und
**dass** längs der Erstreckungsrichtung der Umfangsrille (9,10,11) jeweils in einer senkrecht zur Erstreckungsrichtung des Rillengrundes (12) ausgebildeten Schnittebene sowohl die Verlängerung des radial äußeren Erstreckungsbereichs (17) der zweiten Rillenwand (13) nach radial innen mit dem radial inneren Erstreckungsbereich (15) der zweiten Rillenwand (13) einen Winkel δ als auch die axiale Verlängerung des geradlinigen Rillengrundes (12) ebenfalls mit dem radial inneren Erstreckungsbereich (15) der zweiten Rillenwand (13) den Winkel δ einschließt.

2. Laufflächenprofil eines Fahrzeugreifens gemäß den Merkmalen von Anspruch 1,
wobei die zweite Rillenwand (13) die Umfangsrille (9,10,11) zu der als zur Fahrzeugaußenseite (OU) hinweisend ausgebildeten Schulter und die erste Rillenwand (14) die Umfangsrille (9,10,11) zu der als zur Fahrzeuginnenseite (IN) hinweisend ausgebildeten Schulter hin begrenzt.

3. Laufflächenprofil eines Fahrzeugreifens gemäß den Merkmalen von Anspruch 1 oder 2
wobei längs der Erstreckungsrichtung der Umfangsrille (9,10,11) jeweils in einer senkrecht zur Erstreckungsrichtung des Rillengrundes (12) ausgebildeten Schnittebene der Rillengrund (12) in einem Erstreckungsbereich mit der Erstreckungslänge a, der sich zwischen dem radial inneren Erstreckungsbereich (15) der zweiten Rillenwand (13) mit dem zweiten Schnittwinkel β zur Radialen R im Reifen und dem Übergang (16) zwischen erster Rillenwand (14) und Rillengrund (12) mit einem Krümmungsradius R₁ erstreckt, geradlinig - insbesondere parallel zur Drehachse des Fahrzeugreifens - ausgebildet ist.

4. Laufflächenprofil eines Fahrzeugreifens gemäß den Merkmalen von Anspruch 2 oder 3,
wobei die Erstreckungslänge a mit 0mm ≤a≤16mm ausgebildet ist.

5. Laufflächenprofil eines Fahrzeugreifens gemäß den Merkmalen von einem oder mehreren der vorangegangenen Ansprüche
wobei das Maß der radialen Erstreckung des radial äußeren Erstreckungsbereichs (17) der zweiten Rillenwand (13) mit h₁ und das Maß der radialen Erstreckung des radial inneren Erstreckungsbereichs (15) der zweiten Rillenwand (13) mit h₂ ausgebildet ist, wobei für das Verhältnis von h₂ zu h₁ gilt: 1≥(h₂/h₁)≥0,1, insbesondere 0,5≥(h₂/h₁)≥0,25.

6. Laufflächenprofil eines Fahrzeugreifens gemäß den Merkmalen von einem oder mehreren der vorangegangenen Ansprüche,
wobei der ersten Schnittwinkel γ mit 0°≤γ≤20° - insbesondere mit 3°≤γ≤8°-der zweite Schnittwinkel β mit 30°≤β≤45° - insbesondere mit 38°≤β≤42°- und der dritte Schnittwinkel α mit 1°≤α≤25° - insbesondere mit 8°≤α≤15°-ausgebildet ist.

## Claims

1. Tread profile of a vehicle tyre - in particular a pneumatic vehicle tyre - with one or more circumferential grooves (9, 10, 11), which is/are directed in the circumferential direction of the vehicle tyre, is/are made to extend over the circumference of the vehicle tyre and, with two groove walls (13, 14), respectively delimit(s) axially to both sides a profile rib or row of profile blocks made to extend over the circumference of the vehicle tyre, the circumferential groove (9, 10, 11) being formed with a groove base (12), made to extend over the circumference of the vehicle tyre, and the groove walls (13, 14), made to extend radially outwards from the groove base (12) on both sides of the groove base and delimiting the circumferential groove in the axial direction, therein, respectively in a sectional plane formed perpendicularly to the direction of extent of the groove base (12), the first groove wall (14) is formed along the direction of extent of the circumferential groove (9, 10, 11) such that it is made to slope away from the circumferential groove from the inside outwards in the radial sense with a first sectional angle γ in relation to the radial R in the tyre, and the second groove wall (13) is formed such that it is made to slope away from the circumferential groove from the inside outwards in the radial sense with a radially inner region of extent (15) with a second sectional angle β in relation to the radial R in the tyre and a radially outer region of extent (17) with a third sectional angle α in relation to the radial R in the tyre, and the transition (16) between the first groove wall (14) and the groove base (12) is formed with a radius of curvature R₁, the second sectional angle β being formed greater than the third sectional angle α and the third sectional angle α being formed greater than the first sectional angle γ, **characterized in that** the radius of curvature R₁ is formed with 2 mm ≤ R₁ ≤ 6 mm - in particular with 3 mm ≤ R₁ ≤ 4 mm -, and **in that**, respectively in a sectional plane formed perpendicularly to the direction of extent of the groove base (12), along the direction of extent of the circumferential groove (9, 10, 11) the extension of the radially outer region of extent (17) of the second groove wall (13) radially inwards forms an angle δ with the radially inner region of extent (15) of the second groove wall (13) and the axial extension of the straight groove base (12) likewise forms the angle δ with the radially inner region of extent (15) of the second groove wall (13).

2. Tread profile of a vehicle tyre according to the features of Claim 1, the second groove wall (13) delimiting the circumferential groove (9, 10, 11) in relation to the shoulder formed pointing towards the outside of the vehicle (OU) and the first groove wall (14) delimiting the circumferential groove (9, 10, 11) in relation to the shoulder formed pointing towards the inside of the vehicle (IN).

3. Tread profile of a vehicle tyre according to the features of Claim 1 or 2, wherein, respectively in a sectional plane formed perpendicularly to the direction of extent of the groove base (12), the groove base (12) is formed along the direction of extent of the circumferential groove (9, 10, 11) in a straight line - in particular parallel to the axis of rotation of the vehicle tyre - in a region of extent with the length of extent a, which extends between the radially inner region of extent (15) of the second groove wall (13), with the second sectional angle β in relation to the radial R in the tyre, and the transition (16) between the first groove wall (14) and the groove base (12) with a radius of curvature R₁.

4. Tread profile of a vehicle tyre according to the features of Claim 2 or 3, the length of extent a being formed with 0 mm ≤ a ≤ 16 mm.

5. Tread profile of the vehicle tyre according to the features of one or more of the preceding claims, the degree of radial extent of the radially outer region of extent (17) of the second groove wall (13) being formed with h₁ and the degree of radial extent of the radially inner region of extent (15) of the second groove wall (13) being formed with h₂, the following applying for the ratio of h₂ to h₁: 1 ≥ (h₂/h₁) ≥ 0.1, in particular 0.5 ≥ (h₂/h₁) ≥ 0.25.

6. Tread profile of a vehicle tyre according to the features of one or more of the preceding claims, the first sectional angle γ being formed with 0° ≤ γ ≤ 20 ° - in particular with 3° ≤ γ ≤ 8°, the second sectional angle β being formed with 30° ≤ β ≤ 45° - in particular with 38° ≤ β ≤ 42° - and the third sectional angle α being formed with 1° ≤ α ≤ 25° - in particular with 8° ≤ α ≤ 15°.

## Revendications

1. Profil de surface de roulement pour bandage de roue de véhicule, en particulier pour bandage pneumatique de roue de véhicule, présentant
une ou plusieurs rainures périphériques (9, 10, 11) orientées dans la direction périphérique du bandage de roue de véhicule, s'étendant sur la périphérie du bandage de roue de véhicule et délimitant axialement par deux parois (13, 14) une nervure profilée ou une rangée de blocs profilés qui s'étendent des deux côtés sur la périphérie du bandage de roue de véhicule,
la rainure périphérique (9, 10, 11) présentant un fond de rainure (12) qui s'étend sur la périphérie du bandage de roue de véhicule et des parois (13, 14) qui s'étendent radialement vers l'extérieur à partir du fond (12) de la rainure sur les deux côtés du fond de la rainure et qui délimitent la rainure périphérique dans la direction axiale,
depuis une position radialement intérieure jusqu'à une position radialement extérieure, la première paroi (14) de la rainure étant inclinée en s'éloignant de la rainure périphérique dans la direction d'extension de la rainure périphérique (9, 10, 11) et dans un plan de coupe perpendiculaire à la direction d'extension du fond (12) de la rainure sous un premier angle de coupe γ par rapport à la radiale R du bandage de roue,
depuis une position radialement intérieure jusqu'à une position radialement extérieure, la deuxième paroi (13) de la rainure étant oblique par rapport à la rainure périphérique, une partie (15) s'étendant radialement à l'intérieur formant un deuxième angle de coupe β par rapport à la radiale R du bandage de roue et une partie (17) s'étendant radialement à l'extérieur formant un troisième angle de coupe α par rapport à la radiale R du bandage de roue,
la transition (16) entre la première paroi (14) de la rainure et le fond (12) de la rainure présentant un rayon de courbure R₁,
le deuxième angle de coupe β étant supérieur au troisième angle de coupe α et le troisième angle de coupe α étant supérieur au premier angle de coupe γ, **caractérisé en ce que**
le rayon de courbure R₁ vérifie la relation 2 mm ≤ R₁ ≤ 6 mm et en particulier la relation 3 mm ≤ R₁ ≤ 4 mm,
**en ce que** dans un plan de coupe formé perpendiculairement à la direction d'extension du fond (12) de la rainure, dans la direction d'extension de la rainure périphérique (9, 10, 11), le prolongement de la partie (17) s'étendant radialement vers l'extérieur de la deuxième paroi (13) de la rainure forme dans la direction radialement intérieure avec la partie (15) s'étendant radialement à l'intérieur de la deuxième paroi (13) de la rainure le même angle δ que le prolongement axial du fond rectiligne (12) de la rainure forme avec la partie (15) qui s'étend radialement à l'intérieur de la deuxième paroi (13) de la rainure.

2. Profil de surface de roulement pour bandage de roue de véhicule selon les caractéristiques de la revendication 1, dans lequel la deuxième paroi (13) de la rainure délimite la rainure périphérique (9, 10, 11) en direction de l'épaulement tourné vers le côté extérieur (OU) du véhicule et la première paroi (14) de la rainure délimite la rainure périphérique (9, 10, 11) en direction de l'épaulement tourné vers le côté intérieur (IN) du véhicule.

3. Profil de surface de roulement pour bandage de roue de véhicule selon les caractéristiques des revendications 1 ou 2, dans lequel, dans la direction d'extension de la rainure périphérique (9, 10, 11) et dans un plan de coupe formé perpendiculairement à la direction d'extension du fond (12) de la rainure, dans une partie de longueur a de son extension qui s'étend entre la partie (15) de la deuxième paroi (13) qui s'étend radialement à l'intérieur en formant le deuxième angle de coupe β par rapport à la radiale R du bandage de roue et la transition (16) de rayon de courbure R₁ entre la première paroi (14) de la rainure et le fond (12) de la rainure, le fond (12) de la rainure est configuré en ligne droite, en particulier parallèle à l'axe de rotation du bandage de roue de véhicule.

4. Profil de surface de roulement pour bandage de roue de véhicule selon les caractéristiques des revendications 2 ou 3, dans lequel la longueur d'extension a vérifie la relation 0 mm ≤ a ≤ 16 mm.

5. Profil de surface de roulement pour bandage de roue de véhicule selon les caractéristiques d'une ou plusieurs des revendications précédentes, dans lequel la dimension de l'extension radiale de la partie (17) de la deuxième paroi (13) de la rainure qui s'étend radialement vers l'extérieur est h₁ et la dimension de l'extension radiale de la partie (15) de la deuxième paroi (13) de la rainure qui s'étend radialement à l'intérieur est h₂, le rapport entre h₂ et h₁ étant défini par : 1 ≥ (h₂/h₁) ≥ 0,1 et en particulier 0,5 ≥ (h₂/h₁) ≥ 0,25.

6. Profil de surface de roulement pour bandage de roue de véhicule selon les caractéristiques d'une ou plusieurs des revendications précédentes, dans lequel le premier angle de coupe γ vérifie la relation 0° ≤ γ ≤ 20°, en particulier 3° ≤ γ ≤ 8°, le deuxième angle de coupe β vérifie la relation 30° ≤ β ≤ 45° et en particulier la relation 38° ≤ β ≤ 42° et le troisième angle de coupe α vérifie la relation 1° ≤ α ≤ 25° et en particulier la relation 8° ≤ α ≤ 15°.
